# EUROPÄISCHE PATENTANMELDUNG

(11) **EP 1 449 618 A1**
(43) Veröffentlichungstag der Anmeldung: **25.08.2004**
(21) Anmeldenummer: 04003346.6
(22) Anmeldetag: 14.02.2004
(51) Int. Cl.: B24B 45/00, F16B 37/08

(54) **Schnellspannmutter**

(30) Priorität: 19.02.2003 DE 10307091; 15.03.2003 DE 10311491
(71) Anmelder: Firma Neudecker & Jolitz GmbH & Co., 48712 Gescher (DE)
(72) Erfinder: Dammfeld, Dietmar, 48703 Stadtlohn (DE)
(74) Vertreter: Habbel, Ludwig (Lutz), Dipl.-Ing.

(57) **Zusammenfassung**

Die Erfindung bezieht sich auf eine Schnellspannmutter (21), insbesondere zur Befestigung von Trennscheiben und anderen Werkzeugen an einer Antriebsmaschine mit einem Gewindekörper (3), dessen Gewinde einem Gewinde einer Antriebsspindel (1) der Antriebsmaschine angepaßt ist sowie einem zumindest mittelbar mit dem Gewindekörper verbundenen Anlagekörper (15), dessen werkzeugseitige Anlagefläche in der Spannposition auf das gehaltene Werkzeug pressend ausgebildet ist, wobei Rollkörper (14) als Abstandshalter zwischen zwei einander zugewandten Bauteilen der Schnellspannmutter (21) vorgesehen sind, die den Abstand zwischen Gewindekörper (3) und Anlagefläche mitbestimmend ausgebildet sind, wobei mindestens eine Laufbahn (16) der Rollkörper (14) ein unterschiedliches Höhenniveau aufweist zugunsten eines variablen Abstandes der Bauteile bei unterschiedlicher Position der Rollkörper (14), wobei die Rollkörper bei einem Lösen der Schnellspannmutter (21) in einen abgesenkten Bereich (17) der Laufbahn bewegend ausgebildet sind zugunsten einer Reduzierung des Abstandes zwischen Anlagefläche einerseits und Gewindekörper (3) andererseits.

## Beschreibung

Die Erfindung betrifft eine Schnellspannmutter entsprechend des Oberbegriffes des Hauptanspruches.

Derartige Schnellspannmuttern sind aus der Praxis bekannt und dienen dazu, z. B. Trennscheiben auf der Antriebsspindel von Handwerkzeugen sicher zu befestigen. Im nachfolgenden wird aus Vereinfachungsgründen von einer Schnellspannmutter ausgegangen, die zur Befestigung von Trennscheiben an Handwerkzeugen geeignet ist. Jedoch ist die Erfindung nicht auf diesen speziellen Einsatzzweck beschränkt, sondern umfaßt auch Schnellspannmuttern, die zur Befestigung anderer Werkzeuge dienen kann.

Die Befestigung einer Trennscheibe auf der Antriebsspindel einer Antriebsmaschine soll selbstverständlich einen derart festen Sitz der Trennscheibe ermöglichen, so daß ein ungewolltes Lösen der Trennscheibe beim Betrieb derselben ausgeschlossen ist. Dies könnte z. B. mittels einer handelsüblichen Mutter erfolgen. Diese Befestigung hat jedoch den Nachteil, daß ein Lösen per Hand nicht möglich ist, so daß ein zusätzliches Werkzeug zum Lösen der Mutter verwendet werden muß, was im täglichen Betrieb selbstverständlich lästig ist.

Der Erfindung liegt die Aufgabe zugrunde, eine Schnellspannmutter derart auszubilden, daß sie zum einen einen festen Sitz des zu fixierenden Werkzeuges auf der Antriebsspindel einer Antriebsmaschine ermöglicht und zum anderen ein einfaches Lösen der Schnellspannmutter per Hand ohne zusätzliches Werkzeug ermöglicht.

Die dieser Erfindung zugrundeliegende Aufgabe wird durch die Lehre des kennzeichnenden Teiles des Hauptanspruches gelöst.

Mit anderen Worten ausgedrückt wird eine Schnellspannmutter vorgeschlagen, die über Bauteile verfügt, die axial über Rollkörper in einem Abstand zueinander gehalten werden, wobei die Laufbahnen ein unterschiedliches Höhenniveau aufweisen, so daß bei einer Bewegung der Rollkörper über die Laufbahnen der Abstand der beiden beabstandet zueinander gehaltenen Bauteile der Schnellspannmutter variiert.

Bei einem reduzierten Abstand der beabstandet zueinander gehaltenen Bauteile wird ein besonders einfaches Lösen der Schnellspannmutter möglich bei reduzierten Betätigungskräften.

Vorteilhafte Ausgestaltungen der Erfindung sind in den Unteransprüchen erläutert.

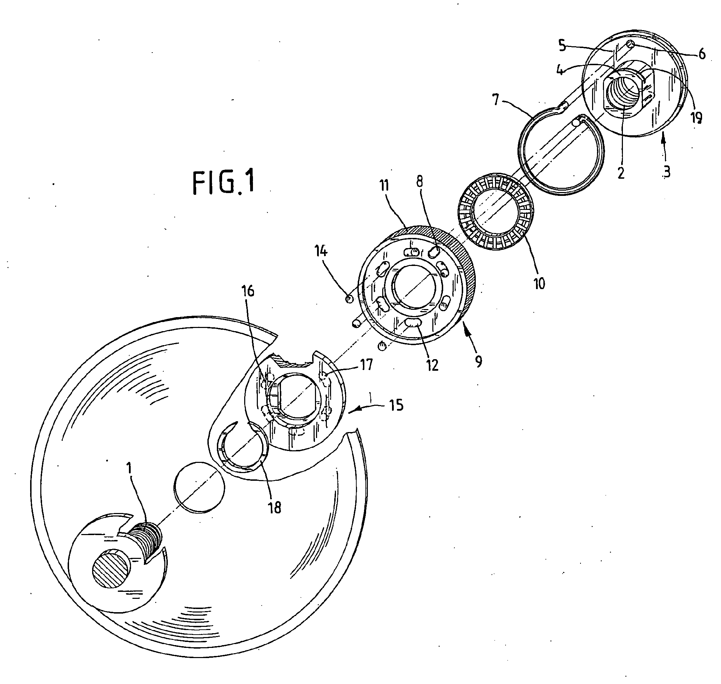

Ein Ausführungsbeispiel der Erfindung wird in den Zeichnungen dargestellt, wobei
- Fig. 1: eine Explosionszeichnung der vorgeschlagenen Schnellspannmutter darstellt,
- Fig. 2: stellt in einer Aufsicht eine Schnellspannmutter in ihrer fixierenden Position dar,
- Fig. 3: stellt in einem Querschnitt eine Schnellspannmutter in ihrer fixierenden Position dar,
- Fig. 4: stellt in einer Draufsicht eine Schnellspannmutter in ihrer lösenden Position dar und
- Fig. 5: stellt eine Schnellspannmutter im Schnitt in ihrer lösenden Position dar.

In den Zeichnungen ist eine Schnellspannmutter 21 durch folgenden Aufbau gekennzeichnet:

Ein Gewindekörper 3 der Schnellspannmutter 21 kämmt mit einem Innengewinde 2 mit einem Außengewinde einer Antriebsspindel 1 einer Antriebsmaschine. Der Gewindekörper 3 weist neben einer Gewindehülse eine Anlageschulter 5 auf, die mit einer Öffnung 6 versehen ist. In diese Öffnung greift eine Feder 7 ein, deren anderes Ende in die Öffnung 8 eines Stellkörpers 9 eingreifend ausgebildet ist.

An der Anlageschulter 5 liegt zudem ein Axiallager 10 an, das somit zu einer Verminderung der Reibung zwischen der Anschlageschulter 5 und dem Stellkörper 9 beiträgt.

Der in diesem Ausführungsbeispiel ringförmig ausgebildete Stellkörper 9 weist an seinem Außenumfang eine Riffelung 11 auf, um eine einfache Drehbetätigung des Stellkörpers 9 zu ermöglichen.

Auf der dem Axiallager 10 abgewandten Seite des Stellkörpers 9 sind Vertiefungen 12 ausgebildet, in denen Rollkörper - in diesem Ausführungsbeispiel Kugeln 14 - gelagert sind, wobei die Vertiefungen 12 größer ausgebildet sind als die Kugeln 14, so daß die Kugeln 14 innerhalb dieser Vertiefungen 12 radial beweglich ausgebildet sind und die Vertiefungen 12 als Laufbahnen für die Kugeln ausgebildet sind, in denen sich die Kugeln über einen begrenzten Bereich, der definiert ist, bewegen können.

Ein Anlagekörper 15 ist benachbart zu dem Stellkörper 9 ausgebildet und an der dem Stellkörper 9 zugewandten Seite des Anlagekörpers 15 sind wiederum Kammern 16 ausgebildet, deren Kammerboden nicht parallel zu der Oberseite des Anlagekörpers 15 ausgebildet ist, sondern die Kammern weisen ihrerseits eine Absenkung 17 auf, wobei der Boden einer derartigen Absenkung 17 weiter von der Oberfläche des Anlagekörpers 15 entfernt ist als der übrige Bereich der Absenkung. Wiederum sind die Abmessungen der Kammern 16 so ausgebildet, daß sie die Kugeln 14 ihrerseits aufnehmen können, wobei sowohl die Vertiefungen 12 des Stellkörpers 9 als auch die Kammern 16 des Anlagekörpers so ausgebildet sind, daß sie lediglich die Kugeln 14 an ihren Randbereichen aufnehmen, d. h. die Kugeln ragen sowohl aus den Vertiefungen als auch den Kammern 16 hervor. Auch die Kammern 16 stellen Laufbahnen für die Kugeln dar, die den Bewegungsbereich der Kugeln begrenzen.

Die Schnellspannmutter wird komplettiert durch einen Sprengring 18, der bei montierter Schnellspannmutter in eine Nut 19 der Gewindehülse 4 hineinragt.

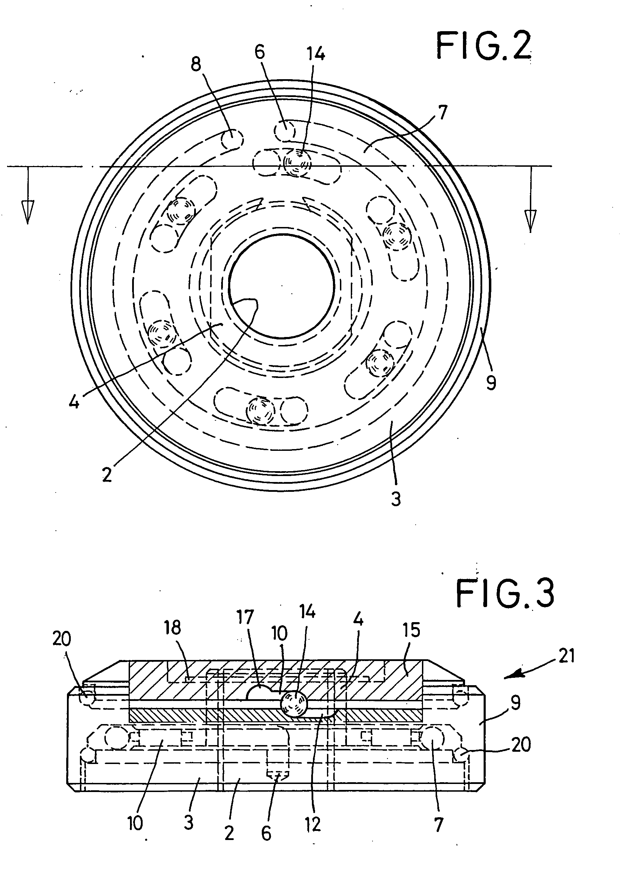

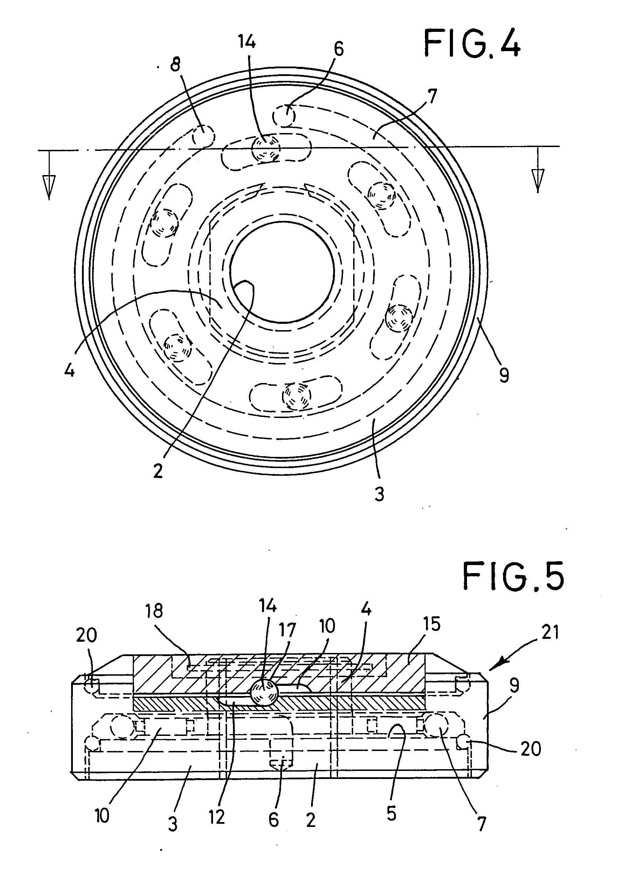

Ansichtszeichnungen der Schnellspannmutter 21 in der gespannten Position (Fig. 2) bzw. in der gelösten Position (Fig. 4) wie auch der Schnittzeichnungen dieser verschiedenen Stellungen der Schnellspannmutter 21 [(Fig. 3) zeigt die gespannte Position und Fig. 5 zeigt die gelöste Position] sind der Beschreibung beigefügt und es wird auf sie bezug genommen.

Wenn eine Trennscheibe oder ein anderes Werkzeug an einer Antriebsmaschine befestigt werden soll, wird nach Auflegen des Werkzeuges auf die Antriebsspindel die Schnellspannmutter auf die Antriebsspindel 1 aufgesetzt, und über den Stellkörper 9 erfolgt ein Aufdrehen der Schnellspannmutter auf die Antriebsspindel, bis der Anlagekörper 15 in Kontakt mit dem Werkzeug, in diesem Ausführungsbeispiel mit der Trennscheibe, gerät. Anschließend erfolgt ein weiteres Aufdrehen der Schnellspannmutter auf die Antriebsspindel 1, bis eine so starke Flächenpressung zwischen Anlagekörper 15 und Trennscheibe erfolgt, daß die Trennscheibe ausreichend fixiert wird. Beim Fixieren bzw. Aufdrehen der Schnellspannmutter befinden sich die Kugeln 14 oder die sonstigen verwandten Rollkörper oder Verschiebekörper in der Position, daß sie sich in den Kammern 16 außerhalb der Absenkungen 17 befinden; dies ist in den Fig. 2 und 3 dargestellt.

Wenn nun die Schnellspannmutter gelöst werden soll, so wird wiederum der Stellkörper 9 in entgegengesetzter Richtung betätigt. Dabei wird das Drehen des Stellkörpers in die lösende Position der Schnellspannmutter durch das eingesetzte Axiallager 10 erleichtert, wie auch durch die eingesetzte Feder 7. Zudem erfolgt beim Lösen der Schnellspannmutter eine Bewegung der Kugeln 14 innerhalb der Laufbahnen, d. h. der Vertiefungen 12 und Kammern 16, so daß die Kugeln oder sonstigen verwandten Rollkörper, Rollzylinder oder Verschiebekörper in die Absenkungen 17 geraten. Dadurch wird dem Anlagekörper eine Bewegung in Richtung des Stellkörpers 9 ermöglicht, so daß aufgrund dieser Axialbewegung des Anlagekörpers 15 der Anpreßdruck des Anlagekörpers an das zu haltende Werkzeug ebenfalls deutlich reduziert wird und hierdurch das Lösen der Schnellspannmutter nochmals deutlich erleichtert wird. Der Abstand zwischen Gewindekörper 3 und der Anlagefläche des Anlagekörpers 15 wird also durch das Bewegen der Kugeln 14 in die abgesenkten Bereiche der Laufbahnen reduziert.

Diese unterchiedliche Stellung des Anlagekörpers 15 in Relation zum Stellkörper 9 wird aus den Fig. 3 und 5 deutlich sowie aus dem in Fig. 3 eingezeichneten Höhenversatz _{"}X".

Um ein Verschmutzen der Bauteile der Schnellspannmutter zu verhindern, werden O-Ringe 20 zwischen Anlagekörper 15 und Stellkörper 9 bzw. zwischen Stellkörper 9 und Anlageschulter 5 eingesetzt.

## Patentansprüche

1. Schnellspannmutter, insbesondere zur Befestigung von Trennscheiben und anderen Werkzeugen an einer Antriebsmaschine mit einem Gewindekörper, dessen Gewinde einem Gewinde einer Antriebsspindel der Antriebsmaschine angepaßt ist sowie einem zumindest mittelbar mit dem Gewindekörper verbundenen Anlagekörper, dessen werkzeugseitige Anlagefläche in der Spannposition auf das gehaltene Werkzeug pressend ausgebildet ist, **gekennzeichnet durch** Rollkörper als Abstandshalter zwischen zwei
einander zugewandten Bauteilen der Schnellspannmutter (21), die den Abstand zwischen Gewindekörper (3) und Anlagefläche mitbestimmend ausgebildet sind, wobei mindestens eine Laufbahn der Rollkörper ein unterschiedliches Höhenniveau aufweist zugunsten eines variablen Abstandes der Bauteile bei unterschiedlicher Position der Rollkörper, wobei die Rollkörper bei einem Lösen der Schnellspannmutter in einen abgesenkten Bereich der Laufbahn bewegend ausgebildet sind zugunsten einer Reduzierung des Abstandes zwischen Anlagefläche einerseits und Gewindekörper (3) andererseits.

2. Schnellspannmutter gemäß Anspruch 1, **gekennzeichnet durch** mindestens eine anlagekörperseitig ausgebildete Laufbahn, die am Anlagekörper (15) ausgebildet ist.

3. Schnellspannmutter gemäß Anspruch 1 oder 2, **gekennzeichnet durch** mindestens eine gewindekörperseitig ausgebildete Laufbahn, die an dem Gewindekörper (3) ausgebildet ist.

4. Schnellspannmutter gemäß Anspruch 1 oder 2, **gekennzeichnet durch** mindestens eine gewindekörperseitig ausgebildete Laufbahn, die an einem Stellkörper (9) ausgebildet ist.

5. Schnellspannmutter gemäß einem der vorhergehenden Ansprüche 1, 3 bis 4, **gekennzeichnet durch** mindestens eine anlagekörperseitig ausgebildete Laufbahn, die an dem Stellkörper (9) ausgebildet ist.

6. Schnellspannmutter gemäß einem der vorhergehenden Ansprüche, **gekennzeichnet durch** mindestens eine Laufbahn, die eine Vertiefung (12) aufweist.

7. Schnellspannmutter gemäß einem der vorhergehenden Ansprüche, **gekennzeichnet durch** Kugeln (14) als Rollkörper.

8. Schnellspannmutter gemäß einem der vorhergehenden Ansprüche, **gekennzeichnet durch** ein Axiallager (10) zwischen dem Gewindekörper (3) und dem Stelllkörper (9).

9. Schnellspannmutter gemäß einem der vorhergehenden Ansprüche, **gekennzeichnet durch** einen zwischen Gewindekörper (3) und Anlagekörper (15) angeordneten Stellkörper (9).
